# EUROPEAN PATENT APPLICATION

(11) **EP 1 336 930 A1**
(43) Date of publication of application: **20.08.2003**
(21) Application number: 02100129.2
(22) Date of filing: 13.02.2002
(51) Int. Cl.: G06F 17/60

(54) **Method and system for defining a storefront for printing digital images**

(71) Applicant: AGFA-GEVAERT, 2640 Mortsel (BE)
(72) Inventor: Tuijn, Chris, c/o AGFA-GEVAERT, Septestraat 27, 2640 Mortsel (BE); Gemis, Marc, c/o AGFA-GEVAERT, Septestraat 27, 2640 Mortsel (BE); Op de Beeck, Eddy, c/o AGFA-GEVAERT, Septestraat 27, 2640 Mortsel (BE); Fuchsberger, Hermann, c/o AGFA-GEVAERT, Septestraat 27, 2640 Mortsel (BE)

(57) **Abstract**

A method for defining a storefront in a system including a client server, a main server and an image server, that can communicate data with each other via a computer network such as the Internet. Via the client server, a customer obtains the storefront from the main server. The storefront has storefront-related data and displays products that may be ordered by a customer. The products involve the printing of digital images. In defining the storefront, the storefront-related data are accessed by at least two partners (21, 31), based on their access rights to the storefront-related data. The partners have a hierarchical relation (25). Their access rights depend on the hierarchical relation (25).

## Description

### FIELD OF THE INVENTION

The invention relates to the field of printing images, and in particular to a system for ordering the printing of digital images via a computer network.

### BACKGROUND OF THE INVENTION

To obtain prints from a roll of exposed photographic film, a customer can take his film roll to a shop that provides a service for film processing and place a print order. The film roll is then developed and prints are made, either in the shop itself, e.g. by means of a minilab, or at another location such as a large laboratory that uses whole sale finishing (WSF) equipment. The customer can then return to the shop to collect the ordered prints.

If the customer is connected to a computer network such as the Internet, he can also scan his film roll to obtain digital images and send the digital images over the computer network, together with a print order, to a site that provides a photofinishing service. The digital images may be scanned from a film roll but they may also be obtained directly by means of a digital camera. From the digital images, the ordered prints are made by means of photofinishing equipment (whole sale finishing (WSF) or minilab). Then, the prints are sent directly to the customer by regular mail, or they are sent to a local shop where the customer can collect his prints. Patent application **EP-A-0 856 972** discloses a network photograph system that provides a customer with a service related to a photograph via a network such as the Internet.

There is still a need for an improved system and method for ordering printing of digital images.

### SUMMARY OF THE INVENTION

The present invention is a method for defining a storefront, used in ordering printing of a digital image, as claimed in independent claim 1, and a system in which the method is implemented. Preferred embodiments of the invention are set out in the dependent claims. Preferably, a method in accordance with the invention is implemented by a computer program as claimed in claim 7.

A system in accordance with the invention preferably includes a client server, a main server and an image server, that are capable of communicating data with each other via a computer network such as the Internet.

In this document, a "server" is defined as a component in a network that is used to provide services to one or more other components in the network. In general, such services may include access to files, routing of e-mail, etc. In this document, the services relate directly or indirectly to the printing of images. A server may have an active, i.e. pushing, role, or a passive, polling role. An example of a server with an active role is a main server that sends an order to a server at the site of a supplier of digital image products. An example of a server with a passive role is a specific server that polls another server to check whether an order for that specific server has already arrived at the other server. A server runs on a hardware device such as a computer or another data processing system.

In this document, "transmitting" data from a first server to a second one includes the case wherein the first server has an active role and the case wherein the second server has a passive, polling role; it also includes the case wherein the data are transmitted from the first to the second server via one or more intermediate servers.

Via the client server, a customer obtains a storefront from the main server. The client server may run on the customer's computer, but it may also run on other hardware. The storefront is e.g. displayed on the customer's computer. The storefront displays a product set comprising one or more digital image products; a digital image product may be a simple print of a digital image or it may involve the printing of digital images, such as a T-shirt or a mug bearing a print of a digital image. A digital image product may include one or more digital images; an example of the latter is a calendar with a digital image for the cover and twelve other digital images, one per month. The digital images are obtained via the image server. One or more of the digital image products displayed in the storefront may be ordered by the customer. Subsequently, the digital images are printed and the ordered products provided by suppliers that are connected to the above-mentioned computer network or to any other network that is connected to that computer network. The products are sent to the customer, e.g. by regular mail, or they are made available for pick-up at a particular place.

A storefront has "storefront-related data" that are used in defining the storefront. It is preferred that a hierarchical configuration of partners, such as a configuration that includes a number of hierarchical levels, or a configuration corresponding to a hierarchical tree, is set up for the definition of storefronts, as follows. In defining the storefront, the storefront-related data are accessed by two (or more) partners, based on their access rights to the storefront-related data. The partners have a hierarchical relation within the hierarchical configuration and the access rights of at least one of the partners depend on the hierarchical relation between the partners. The "access rights" to data may include rights to create, delete, modify, read the specific data. To define a storefront, the access rights of a first partner to specific storefront-related data of the storefront are checked. If the first partner has no access rights at all to the specific storefront-related data, access to the specific data is refused. Otherwise, the first partner is granted access to the data, to create, delete, modify, read the data or any combination of these, depending on his access rights. Likewise, the access rights of a second partner to the specific storefront-related data are checked, and depending on his access rights, access is either refused or granted for the second partner.

A first advantage of the invention is that it is possible to hide particular storefront-related data from specific partners. Another advantage is that it is possible to allow only particular partners to perform certain tasks, such as defining a product that is to be displayed in a storefront.

Preferred embodiments of a system in accordance with the invention may include features of a method - as claimed or as described above or below - in accordance with the invention.

Further advantages and embodiments of the present invention will become apparent from the following description and drawings.

### BRIEF DESCRIPTION OF THE DRAWINGS

The invention is described with reference to the following drawing without the intention to limit the invention thereto, and in which:
Fig. 1 shows a first embodiment of a hierarchical configuration for the definition of a storefront;
Fig. 2 shows a second embodiment of a hierarchical configuration for the definition of a storefront.

### DETAILED DESCRIPTION OF THE INVENTION

A method in accordance with the invention is concerned with the definition of storefronts that allow a customer who is connected to a computer network such as the Internet to define print orders of digital images on different products. Preferably, the following steps are involved. The fulfillment of the print order is carried out by one or more photofinishers or other production facilities, that are connected to the same computer network or to any other network that is connected to that computer network. The resulting products are sent to the customer, e.g. by regular mail, or they are made available to the customer for pick-up at a particular place. The customer has a connection to the computer network when placing the print order. The print order travels through different nodes on the network to end up at the site of one or more photofinishers or other production facilities taking care of the fulfillment.

The digital images may come from different sources. In a first case, the images are stored locally at the client server (e.g. on the hard disk of the customer's computer, on the storage medium of a Personal Digital Assistant (PDA) or mobile phone, etc.). In a second case, the images are on-line at another server, called the "image server". Preferably, references to the images, e.g. URL's (Uniform Resource Locators), are transmitted from the image server to the client server and are used during the definition of the print order. Thumbnails of the images may be generated and sent to the client server. In a third case, the images result from scanning film rolls at a photofinisher's site; the high-resolution images are then typically stored at a so-called lab server, and low-resolution thumbnail representations are available from an image server. In a fourth case, images that were uploaded previously to an image storing server are reordered by the customer. In all cases, "image references" are transmitted from the image server to the client server. An "image reference" is a reference in one way or another to an image, such as a pointer to the image, a thumbnail of the image, the image itself. The first case discussed above is a special case wherein the image server and the client server run on the same device. As a matter of fact, the image server and the main server - which is the server from which the storefronts are obtained - may also run on the same device, in a specific embodiment.

The actual fulfillment of the print orders is done by "fulfillment partners", i.e. photofinishers or other production facilities. A typical example is a photofinisher that owns and deploys photofinishing equipment (whole sale finishing (WSF) equipment or minilab) to process the incoming orders. Preferably, the customer can choose between different storefronts that operate in the regions of their recipients. The storefronts display products lists (lists of products with prices) that can be used to make print orders.

In a specific embodiment, products from different fulfillment partners may be displayed in a single storefront and the customer can include them in a single order. For instance, a single order may include on the one hand simple photographic prints from a specific fulfillment partner, and on the other hand an article from a different fulfillment partner such as a T-shirt or a mug bearing a print of a digital image.

There may be other partners besides the fulfillment partners; preferably, we have the following hierarchy of partners:
- fulfillment partners: the fulfillment partners do the fulfillment of the print orders and act for one or more distribution partners. In case of a mail-order e.g., the fulfillment partner sends the print order directly to the customer;
- distribution partners (also called distributors): the distribution partners are usually operating under a particular brand and offer a whole range of pick-up points (where the printed orders can be picked up). A fulfillment partner sends the orders to the distribution partners and they typically distribute the print orders to their pick-up points;
- retailers: a retailer operates at a pick-up point.

In a preferred embodiment of the invention, a hierarchical configuration of partners, such as a configuration that includes a number of hierarchical levels, or a configuration corresponding to a hierarchical tree, is set up for the definition of storefront-related data. In this configuration, there is a hierarchical relation between the partners. Preferably, the access rights of the partners to the storefront-related data depend on this hierarchical relation. Depending on the access rights they have, the different partners are able to create/modify storefront-related data: they may be able to create/modify complete storefronts, create products, create/modify product data such as products sizes or the minimum required image resolution to obtain good results, change price-lists, change pick-up points, etc.

The hierarchy of partners discussed above may correspond to the following levels:
- the fulfillment level: at this level, the fulfillment of the print orders is being carried out. The fulfillment partners will download the orders for all the storefronts they manage and do the fulfillment. After fulfillment, they usually ship the obtained products to the distribution partners or directly to the retailers; in case of a mail-order e.g., the fulfillment partner sends the products directly to the customer;
- the distribution level: often, big organizations (chains such as 'Free Record Shop', 'Mister Minit', 'Hema', 'Kruidvat', etc. to give some examples in Belgium) have a large network of shops and/or pick-up points. A specific storefront is created for such organizations and their shops are shown as pick-up points. These chains typically work with one or more fulfillment partners for the actual fulfillment of the print orders. They get the print orders from the fulfillment partners and do the distribution of the products to their shops themselves;
- the retail level: it is also possible to give presence to independent shops or specific shops in a chain at storefront level.

In a preferred embodiment of the invention, the storefront-related data are stored on the main server. The storefront-related data may be defined by an administrator by means of a software module for storefront management. The user interface of the storefront management module preferably runs within a browser environment, such as Internet Explorer™ or Netscape™, and may be implemented in Java Server Pages (JSP). An administrator with the proper access rights can then define storefront-related data directly on the main server from his computer; it is not important whether the administrator is a fulfillment partner, a distribution partner or a retailer partner: only his access rights count. Such a flexibility is another advantage of the invention; it is thus possible that e.g. a retailer defines his own storefronts.

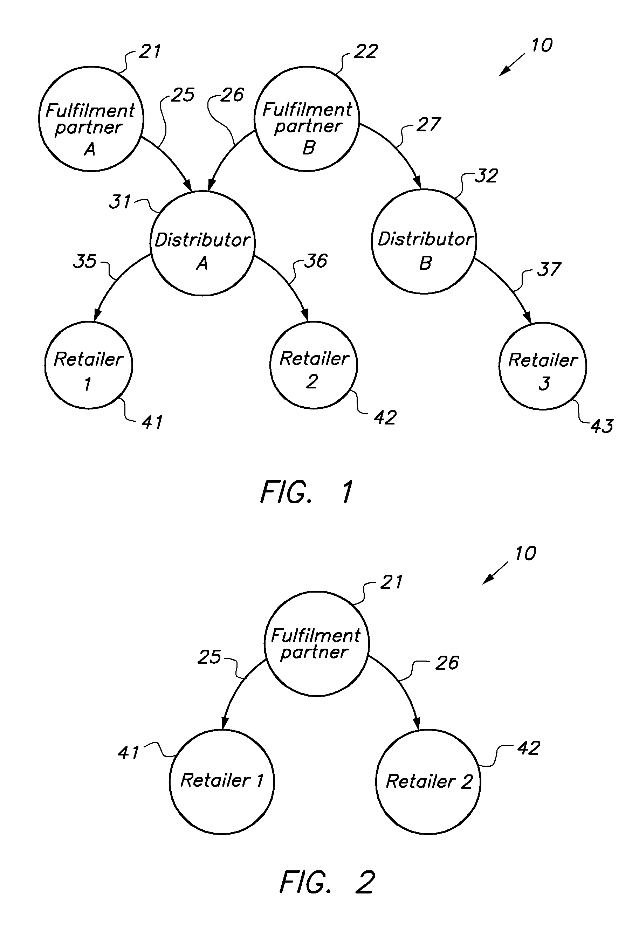

Fig. 1 shows a first embodiment of a hierarchical configuration 10 for the definition of storefront-related data in accordance with the invention. The hierarchical tree 10 of Fig. 1 represents a configuration of a plurality of fulfillment partners with several distribution partners who in turn service several retailers. The nodes of the hierarchical tree 10 represent partners 21, 22, 31, 32, 41 - 43, linked to each other via arrows 25 - 27, 35 - 37 representing the hierarchical relations between the partners. An arrow is directed from a first node, called a parent node, to a second node, called a child node; e.g. arrow 25 is directed from parent 21 to child 31. Preferably, there is no restriction to the number of children that a parent node may have. E.g. a fulfillment partner 22 may have any number of distribution partners 31, 32 and a distribution partner 31 may have any number of retailers 41, 42.

For this first embodiment, the hierarchy 10 is preferably set up once by the system operator (who is not a partner). The system operator creates administrators who can define storefront-related data; an administrator may be a fulfillment partner, a distribution partner, a retailer. When the system operator creates an administrator, the administrator is assigned create rights, a position in the hierarchy and a login name and password; these are now discussed in detail.

Create rights are assigned for individual storefront-related data, or , which is preferred, for storefront-related data categories. Examples of data categories are: define product(s), define product price list(s), define pickup point(s). A create right is in fact a create/delete right: an administrator who can create specific data, can also delete them. Create/delete rights are defined per administrator and per data or data category at set-up time by the system operator. The read and modify access rights of an administrator, however, depend on the position in the hierarchy of the administrator, as disclosed below. Moreover, the read and modify access rights are preferably defined at run-time, depending on the "ownership" of the data, as will be explained further below.

The position in the hierarchy is defined by the relationship in the hierarchical tree 10 between the concerned node and its own parent and children nodes. Different types of relationship may exist between two nodes, such as a 'parent' relationship and a 'use' relationship.

A 'parent' relation 35 (see Fig. 1) between two nodes 31 and 41 is bi-directional: the child 41 can use, i.e. read, all data defined by the parent 31 and by the nodes 21, 22 above the parent 31 in the tree 10, and the parent 31 can modify all data that were created by the child 41 or further below the tree - in Fig. 1, there are no nodes below node 41 (remark: a first node 41 is "below" a second one 31, 21, 22 in the tree 10 if the first node 41 can be reached from the second one 31, 21, 22 by following arrows 25, 26, 35; if a first node is below a second one, then the second node is "above" the first one).

A 'use' relation 25 between two nodes 21 and 31 is unidirectional: the child 31 can use, i.e. read, all data defined by the parent 21 and by nodes above the parent 21 in the tree - in Fig. 1, there are no nodes above node 21 - and the parent 21 and the nodes above the parent do not see, i.e. cannot read, the data created by the child 31. Thus, by means of a 'use' relationship 25, a fulfillment partner 21 may define products but is not allowed to see the prices defined by the distributor 31.

A login name and a password are also assigned to an administrator. If an administrator starts the software module for storefront management with his login name and password, he automatically gets the create/delete access rights as defined by the system operator; his read and modify access rights depend on the position of the administrator in the hierarchy.

As mentioned already above, preferably the read and modify access rights to the storefront-related data are defined at run-time, depending on the "ownership" of the concerned data. Initially, the administrator who creates specific data is the owner of the specific data, and has read and modify access rights to the specific data. Subsequently, read and modify access rights may be changed implicitly by transferring the ownership of the concerned data from one administrator to another one. The owner of specific data can modify the specific data, and all the parents of the owner can modify the specific data as well, provided they have a 'parent' relationship, not a 'use' relationship, with the owner. The child nodes of the owner cannot modify but only read the specific data. Moreover, the scope of visibility of the specific data, i.e. who can read or use the data, is limited to the owner and all nodes below and above the owner; for the nodes above the owner, this is of course limited to the nodes having 'parent' relationships, not 'use' relationships, to the owner. Neighbors cannot see the specific data; a "neighbor' of a particular node is a node that is reached by following arrows upstream and downstream; in Fig. 1, distributors 31 and 32 are neighbors and retailers 41-43 are neighbors. Remark: the right to create/delete data is not passed with the ownership: the system operator defines the create/delete access rights per administrator and for all the storefront-related data or data categories. An advantage of defining read and modify access rights by ownership is that this is simpler than having to assign read and modify access rights to all the different administrators for all the storefront-related data.

Now, some examples of configurations wherein ownership is applied are given. In a first example, a distributor wants to modify a price list. A fulfillment partner can then define all storefront-related data, include the price list, and subsequently transfer the ownership of the price list to the distributor. The distributor and the fulfillment partner can now modify the price list (provided there is a 'parent' relation between them; in case of a 'use' relation, the fulfillment partner cannot see nor modify the price list). All the retailers below the distribution partner can use the defined price list to create storefronts, but they cannot modify the price list. In a second example, a fulfillment partner transfers the ownership of a first price list to a first distributor and the ownership of a second price list to a second distributor. The retailers of the first distributor only see the first price list, not the second one; the retailers of the second distributor likewise only see the second price list, not the first one.

Ownership is further illustrated by an embodiment that has the configuration 10 shown in Fig. 2. This embodiment includes one fulfillment partner 21 with two retailers 41, 42, wherein the fulfillment partner 21 predefines all the storefront-related data, while the retailers 41, 42 are allowed to create and modify all the storefront-related data except the products. The system operator creates the fulfillment partner and retailer administrators with the configuration 10 shown in Fig. 2 and with the required create access rights (the fulfillment partner has create access rights to all data, the retailers do not have create access rights to the products). The fulfillment partner 21 has a 'parent' relationship 25 with the first retailer 41 and a 'parent' relationship 26 with the second retailer 42. The fulfillment partner 21 then creates all storefront-related data. After the fulfillment partner 21 has created products, price lists, storefronts, etc. he moves the ownership of all storefront-related data except the products to the respective retailers 41, 42. The retailers can now modify and read these data; they can also create them since they obtained create access rights. The retailers have only read access to the product data. They can create and modify their own storefronts and price lists.

In the following embodiment, ownership of storefront-related data is not transferred. This embodiment has the configuration 10 shown in Fig. 1. The embodiment includes two fulfillment partners 21, 22, a plurality of distributors 31, 32 and a plurality of retailers 41-43. In this embodiment, the fulfillment partners only define the products. The distributors define the pricing. The distributors may add extra products to the product offering of the fulfillment partner(s). The retailers are responsible for the storefronts. The system operator creates the fulfillment partner, distributor and retailer administrators with the configuration 10 shown in Fig. 1 and with the required create access rights: each fulfillment partner has create/delete access rights to the products he defines; each distributor has create/delete access rights to the products he defines and to the other storefront-related data or data categories he defines such as 'define price list'; each retailer has create/delete access rights to the storefront-related data or data categories he defines such as 'define storefront'. The relationships 25-27, shown in Fig. 1, between the fulfillment partners 21, 22 and the distributors 31, 32 are 'use' relationships. The relationships 35-37, shown in Fig. 1, between the distributors 31, 32 and the retailers 41-43 are 'parent' relationships. The fulfillment partners 21, 22 then define their products. The distributors 31, 32 add their own products (if any) and define the price lists. The retailers 41-43 define the final storefronts. Now, the owner of the data category 'define product(s)' is the fulfillment partner or distributor who defined the concerned product. The owner of the data category 'define product price list(s)' is the distributor who defined the concerned price list. The owner of the data categories 'define storefront(s)' and 'define pickup point(s)' is the concerned retailer.

An important advantage of a hierarchical system as disclosed above is flexibility. The storefront-related data can easily be re-used. Because of the hierarchy, the products are disconnected from the storefronts wherein they are shown. The products are preferably defined by the fulfillment partners. Other partners, such as distributors and storefront owners, who co-operate with a specific fulfillment partner (the co-operation is reflected by the hierarchy) may display products of that specific fulfillment partner in their storefronts. They can re-use the product data, possibly add or change product data - they can e.g. translate a product description. Another example of data that may be re-used are shipment or payment data; such data are typically defined by retailers and/or distributors.

That the storefront-related data can easily be re-used also results in smaller set-up times, i.e. much less time is required to set up storefronts, distributors, etc. Some related examples and advantages are as follows:
- a distributor may e.g. have hundreds of pick-up points; the data of these pick-up points only have to be entered into the system once. They can then be used in all storefronts serviced by this distributor;
- a distributor may use several fulfillment partners at the same time. In this way, photos may be printed by a particular photofinisher and specialty products may be provided by another company;
- if a fulfillment partner goes down for some reason (e.g. due to overload or a technical breakdown), another fulfillment partner, who preferably supports the same products, may take over;
- a fulfillment partner may even put out a portion of his orders to a subcontractor;
- invoicing of the products may be done at different levels (depending on the configuration): at the fulfillment level, at the distribution level, at the retailer where the products are picked up.

Moreover, because of the flexible configuration, completely different organizations may be added to the system as fulfillment partners or as another type of partners.

The invention is not limited to the embodiments disclosed above. Less or more access rights than only the create/delete access rights may be defined by the system administrator. In a particular embodiment, there are separate access rights for creating data and for deleting data. In another embodiment, access rights do not depend on ownership of storefront-related data, i.e. there are no owners of storefront-related data.

Those skilled in the art will appreciate that numerous modifications and variations may be made to the embodiments disclosed above without departing from the scope of the present invention.

### List of reference signs

- 10 :: configuration
- 21 :: partner
- 22 :: partner
- 25 :: relation
- 26 :: relation
- 27 :: relation
- 31 :: partner
- 32 :: partner
- 35 :: relation
- 36 :: relation
- 37 :: relation
- 41 :: partner
- 42 :: partner
- 43 :: partner

## Claims

1. In a system comprising:
- a client server for obtaining a storefront by a customer, said storefront showing to said customer a product set comprising a digital image product for being ordered by said customer, said digital image product including an image having an image reference;
- a main server for transmitting said storefront to said client server;
- an image server for transmitting said image reference to said image to said client server;
a method for defining said storefront, the method comprising the steps of:
- checking first access rights of a first partner 21, 22, 31, 32, 41-43 to storefront-related data of said storefront;
- based on said first access rights:
A. accessing said storefront-related data by said first partner; or
B. refusing access to said storefront-related data by said first partner;
- checking second access rights of a second partner 21, 22, 31, 32, 41-43 to said storefront-related data, said second partner 21, 22, 31, 32, 41-43 having a hierarchical relation 25-27, 35-37 to said first partner 21, 22, 31, 32, 41-43;
- based on said second access rights:
A. accessing said storefront-related data by said second partner; or
B. refusing access to said storefront-related data by said second partner
wherein said second access rights depend on said hierarchical relation 25-27, 35-37.

2. The method according to claim 1 wherein said first partner 21, 22, 31, 32, 41-43 is a fulfillment partner 21, 22.

3. The method according to any one of the preceding claims wherein said second partner 21, 22, 31, 32, 41-43 is selected from the group of a distribution partner 31, 32 and a retailer 41-43.

4. The method according to any one of the preceding claims, further comprising the step of:
- defining an owner 21, 22, 31, 32, 41-43 of said storefront-related data;
wherein said first and said second access rights to said storefront-related data depend on said ownership of said storefront-related data.

5. The method according to claim 4, wherein said owner 21, 22, 31, 32, 41-43 of said storefront-related data is said first partner 21, 22, 31, 32, 41-43.

6. The method according to claim 5, further comprising the step of:
- transferring said ownership of said storefront-related data from said first partner 21, 22, 31, 32, 41-43 to a third partner 21, 22, 31, 32, 41-43.

7. A computer program comprising computer program code means adapted to perform the method according to any one of claims 1 to 6 when said program is run on a computer.

8. A computer readable medium comprising program code adapted to carry out the method according to any one of claims 1 to 6 when run on a computer.

9. A data processing system comprising means for carrying out the steps of the method according to any one of claims 1 to 6.

10. Use of the data processing system according to claim 9 for ordering printing of an image.
